(19) Europäisches Patentamt European Patent Office Office européen des brevets

(11) **EP 4 660 012 A1**

(12) **EUROPEAN PATENT APPLICATION**
published in accordance with Art. 153(4) EPC

(43) Date of publication:
**10.12.2025 Bulletin 2025/50**

(21) Application number: **24749953.6**

(22) Date of filing: **17.01.2024**

(51) International Patent Classification (IPC):
**B60Q 1/14** $^{(2006.01)}$

(52) Cooperative Patent Classification (CPC):
**B60Q 1/14**

(86) International application number:
**PCT/JP2024/001090**

(87) International publication number:
**WO 2024/161999 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023 JP 2023013111**
**31.01.2023 JP 2023013112**

(71) Applicant: **Koito Manufacturing Co., Ltd.**
**Tokyo 141-0001 (JP)**

(72) Inventors:
• **YAMAMOTO, Teruaki**
  **Shizuoka-shi, Shizuoka 424-8764 (JP)**
• **HORIBA, Takeshi**
  **Shizuoka-shi, Shizuoka 424-8764 (JP)**

(74) Representative: **Hoffmann Eitle**
**Patent- und Rechtsanwälte PartmbB**
**Arabellastraße 30**
**81925 München (DE)**

(54) **VEHICLE HEADLIGHT**

(57) This vehicle headlight can form: a first light distribution pattern (P11) applied to a region below a cutoff line (CL); a second light distribution pattern (P12) applied to at least a region above the cutoff line (CL); and a third light distribution pattern (P13) applied along the cutoff line (CL) so as to overlap the cutoff line (CL). The second light distribution pattern (P12) includes a plurality of irradiation regions. At least partial light distribution of the third light distribution pattern (P13) is controlled in association with light distribution of the second light distribution pattern (P12) to the plurality of irradiation regions.

FIG. 6

EP 4 660 012 A1

**Description**

TECHNICAL FIELD

The present disclosure relates to a vehicle headlamp.

BACKGROUND ART

Patent Literature 1 discloses a vehicle lamp capable of improving visibility of a driver by blurring a cutoff line.

CITATION LIST

PATENT LITERATURE

Patent Literature 1: JP2008-262755A

SUMMARY OF INVENTION

TECHNICAL PROBLEM

The higher the mounting position of a vehicle headlamp on a vehicle, the closer a cutoff line of a low beam light distribution pattern becomes to a mounting height of a rearview mirror of a preceding vehicle. Therefore, when the mounting position is high, it is also preferable to form a low beam light distribution pattern with a sharp cutoff line where the light and dark suddenly change, thereby reducing glare to a driver of a preceding vehicle. However, this makes it difficult to meet the demand for forming a low beam light distribution pattern having good visibility by blurring the cutoff line as in Patent Literature 1.
An object of the present disclosure is to provide a vehicle headlamp capable of forming a light distribution pattern with good visibility while reducing occurrence of glare even when a mounting position is high.

SOLUTION TO PROBLEM

A vehicle headlamp according to an aspect of the present disclosure is a vehicle headlamp to be mounted on a vehicle,

the vehicle headlamp being configured to form:

a first light distribution pattern emitted to a region below a cutoff line,
a second light distribution pattern emitted to at least a region above the cutoff line; and
a third light distribution pattern emitted along the cutoff line to overlap the cutoff line,

the second light distribution pattern including a plurality of irradiation regions, and
light distribution of at least a part of the third light distribution pattern being controlled in conjunction with light distribution of the plurality of irradiation regions of the second light distribution pattern.

A vehicle headlamp according to another aspect of the present disclosure is a vehicle headlamp to be mounted on a vehicle,

the vehicle headlamp being configured to form

a first light distribution pattern emitted to a region below a cutoff line,
a second light distribution pattern emitted to at least a region above the cutoff line, and
a third light distribution pattern emitted along the cutoff line to overlap the cutoff line, and

even in a case where the first light distribution pattern is emitted, luminous intensity of at least a part of an irradiation region of the third light distribution pattern being adjusted under a predetermined condition.

ADVANTAGEOUS EFFECTS OF INVENTION

According to the present disclosure, it is possible to provide a vehicle headlamp capable of forming a light distribution pattern with good visibility while reducing occurrence of glare even when a mounting position is high.

BRIEF DESCRIPTION OF DRAWINGS

[FIG. 1] FIG. 1 is a perspective view of a vehicle equipped with a vehicle headlamp according to an embodiment of the present disclosure (hereinafter, simply referred to as the present embodiment).
[FIG. 2] FIG. 2 is a block diagram of a system configuration including the vehicle headlamp according to a first embodiment.
[FIG. 3] FIG. 3 is a cross-sectional view of the vehicle headlamp according to the first embodiment.
[FIG. 4] FIG. 4 is a diagram illustrating light distribution patterns emitted by the vehicle headlamp in the first embodiment.
[FIG. 5] FIG. 5 is a diagram illustrating a low beam selected light distribution pattern during low beam emission in the first embodiment.
[FIG. 6] FIG. 6 is a diagram illustrating a high beam light distribution pattern during high beam emission in the first embodiment.
[FIG. 7] FIG. 7 is a diagram illustrating a state in which a cutoff line is blurred.
[FIG. 8] FIG. 8 is a diagram illustrating a state in which the cutoff line is blurred.
[FIG. 9] FIG. 9 is a diagram illustrating a high beam light distribution pattern during high beam emission in a first modification of the first embodiment.
[FIG. 10] FIG. 10 is a diagram illustrating a low beam selected light distribution pattern during low beam emission in the first modification of the first embodiment.
[FIG. 11] FIG. 11 is a diagram illustrating a high beam light distribution pattern during high beam emission in a second modification of the first embodiment.
[FIG. 12] FIG. 12 is a diagram illustrating a low beam selected light distribution pattern during low beam emission in the second modification of the first embodiment.
[FIG. 13] FIG. 13 is a diagram illustrating each light distribution pattern emitted by a vehicle headlamp according to a second embodiment.
[FIG. 14] FIG. 14 is a diagram illustrating a high beam light distribution pattern during high beam emission in a modification.

DESCRIPTION OF EMBODIMENTS

Hereinafter, the present embodiment will be described with reference to the drawings. Dimensions of members illustrated in the drawings may be different from actual dimensions of the members for convenience of description.

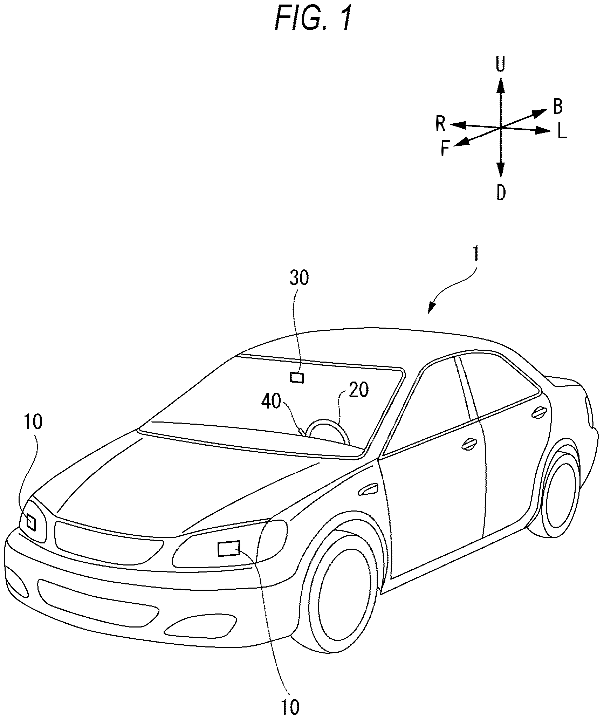

In the description of the present embodiment, a "left-right direction", an "upper-lower direction", and a "front-rear direction" may be appropriately referred to for convenience of description. The directions are relative directions set for a vehicle 1 illustrated in FIG. 1. Here, the "left-right direction" is a direction including a "left direction" and a "right direction", and is also a vehicle width direction of the vehicle 1. The "upper-lower direction" is a direction including an "upper direction" and a "lower direction". The "front-rear direction" is a direction including a "front direction" and a "rear direction". The front-rear direction is a direction orthogonal to the left-right direction and the upper-lower direction. In the drawings, a reference numeral U indicates the upper direction. A reference numeral D indicates the lower direction. A reference numeral F indicates the front direction. A reference numeral B indicates the rear direction. A reference numeral L indicates the left direction. A reference numeral R indicates the right direction.

(First Embodiment)

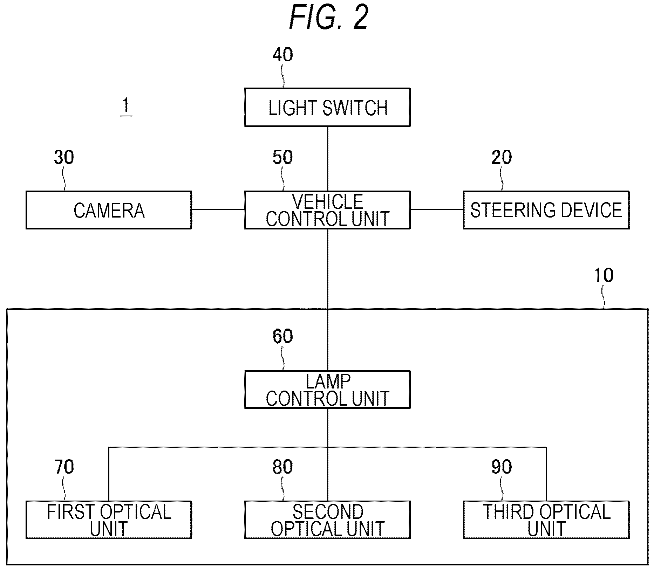

First, a vehicle headlamp 10 according to the present embodiment will be described below with reference to FIGS. 1 to 4. FIG. 1 is a perspective view of a vehicle 1 on which the vehicle headlamp 10 is mounted. FIG. 2 is a block diagram of a system configuration including the vehicle headlamp 10. The vehicle 1 is, for example, a vehicle (an autonomous vehicle) that can travel in a manual driving mode and/or an autonomous driving mode.

As illustrated in FIGS. 1 and 2, the vehicle 1 includes the vehicle headlamp 10, a steering device 20, a camera 30, a light switch 40, and a vehicle control unit 50. As illustrated in FIG. 1, the vehicle headlamp 10 are disposed on a front right side and a front left side of the vehicle 1. The steering device 20 is provided, for example, inside the vehicle 1. The camera 30 is disposed, for example, near a windshield. The camera 30 is disposed between the vehicle headlamp 10 disposed on the front right side of the vehicle 1 and the vehicle headlamp 10 disposed on the front left side of the vehicle 1, in the vehicle width direction of the vehicle 1 (left-right direction in FIG. 1). The light switch 40 is provided, for example, in the vicinity of the steering device 20.

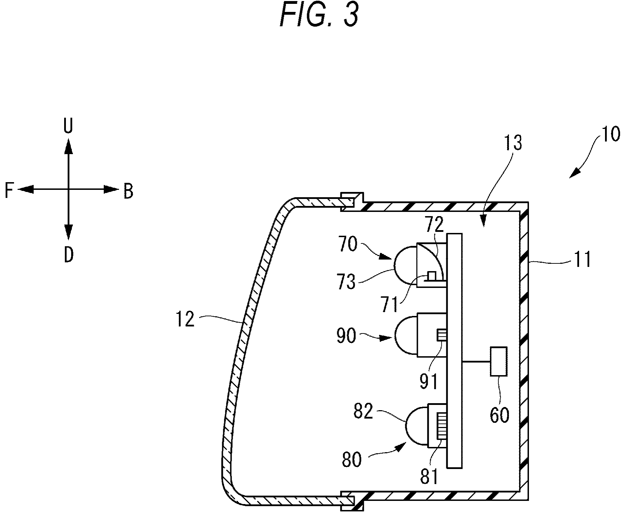

As illustrated in FIG. 2, the vehicle headlamp 10 includes a lamp control unit 60, a first optical unit 70, a second optical unit 80, and a third optical unit 90. As illustrated in FIG. 3, the vehicle headlamp 10 includes a lamp body 11 having an opening in front of the vehicle headlamp 10, and a light-transmitting outer cover 12 that covers the opening of the lamp body 11. Within a lamp chamber 13 formed by the lamp body 11 and the outer cover 12, the lamp control unit 60, the first optical unit 70, the second optical unit 80, and the third optical unit 90 are accommodated.

Returning to FIG. 2, the steering device 20 will be described. The steering device 20 includes, for example, a steering wheel.

The camera 30 is, for example, a camera including an imaging element such as a charge-coupled device (CCD) or a complementary MOS (CMOS). The camera 30 is configured to acquire imaging data by capturing images of the surroundings of the vehicle 1 (for example, an area in front of the vehicle 1). The camera 30 is configured to output the imaging data to the vehicle control unit 50.

The light switch 40 is configured to, for example, switch the vehicle headlamp 10 ON and OFF, and switch a light distribution pattern to be emitted, according to an operation by a driver of the vehicle 1. The driver of the vehicle 1 can select whether to turn on low beam or high beam by operating the light switch 40. In a case where the driver of the vehicle 1 operates the light switch 40, the light switch 40 generates a control signal for emitting a light distribution pattern corresponding to the operation, and transmits the signal to the vehicle control unit 50.

The vehicle control unit 50 is configured to control traveling of the vehicle 1. The vehicle control unit 50 is configured to determine the surrounding environment of the vehicle 1 based on surrounding environment information, and transmit a determination result to the lamp control unit 60. The vehicle control unit 50 is implemented by, for example, at least one electronic control unit (ECU). The electronic control unit includes, for example, a computer system including one or more processors and one or more memories, and an electronic circuit including an active element such as a transistor and a passive element.

The vehicle control unit 50 is configured to perform image analysis on the captured imaging data output from the camera 30. The vehicle control unit 50 is configured to detect the surrounding environment information indicating the surrounding environment of the vehicle 1 from the imaging data, and transmit the surrounding environment information to the lamp control unit 60. The surrounding environment information includes, for example, position information of an object (an oncoming vehicle, a preceding vehicle, a sign, or the like) located in front of the vehicle 1. The position information is, for example, an angular coordinate that represents the angle of the object as viewed from the vehicle 1.

The vehicle control unit 50 is configured to transmit a signal for controlling the vehicle headlamp 10 to the lamp control unit 60, based on the control signal from the light switch 40. For example, in a case where the driver of the vehicle 1 performs an operation on the light switch 40 to emit a low beam selected light distribution pattern, the vehicle control unit 50 receives from the light switch 40 a control signal for emitting the low beam selected light distribution pattern and transmits the control signal to the lamp control unit 60. For example, in a case where the driver of the vehicle 1 performs an operation on the light switch 40 to emit a high beam light distribution pattern (for example, an ADB light distribution pattern), the vehicle control unit 50 receives from the light switch 40 a control signal for emitting the high beam light distribution pattern and transmits the control signal to the lamp control unit 60.

The lamp control unit 60 may have the same hardware configuration as the vehicle control unit 50. The lamp control unit 60 is configured to control the first optical unit 70, the second optical unit 80, and the third optical unit 90, based on the surrounding environment information received from the vehicle control unit 50.

The first optical unit 70 is configured to emit light to a region including a cutoff line and at least a region below the cutoff line. As illustrated in FIG. 3, the first optical unit 70 includes, for example, at least one light source 71, a reflector 72, and a projection lens 73. The light source unit 71 is implemented by, for example, a light emitting diode (LED) element or a laser diode (LD) element. The light source 71 is configured to emit light toward the reflector 72. The reflector 72 is configured to reflect the light emitted from the light source 71 toward the projection lens 73. The projection lens 73 is, for example, an aspherical lens in which a front surface is a convex surface and a rear surface is a flat surface. The projection lens 73 is formed of a transparent material such as a transparent resin such as acrylic. The projection lens 73 is configured to project the light reflected by the reflector 72 onto a front region of the vehicle 1.

The second optical unit 80 is configured to emit light to a region including at least a region above the cutoff line and reduce light to a region among the region. In the present specification, the term "reduce light" includes blocking at least a part of the light emitted from the second optical unit 80 and reducing the intensity of the light emitted from the second optical unit 80. The second optical unit 80 is configured to emit, for example, an adaptive driving beam (ADB) light distribution pattern. The ADB light distribution pattern is a light distribution pattern in which a region where an object such as a preceding vehicle or an oncoming vehicle is present is not irradiated with light in the high beam light distribution pattern, and is a light distribution pattern in which a non-irradiation region is changed depending on the presence or absence and the position of the object.

The second optical unit 80 includes a light source 81 and a projection lens 82. The light source 81 includes, for example, an LED array. The LED array is, for example, a light source in which a plurality of micro LED light emitting elements are arranged in an array. The light emission states of the plurality of micro LED light emitting elements included in the light source 81 can be changed independently of each other. That is, in the vehicle headlamp 10, the lamp control unit 60 can perform ON/OFF control and brightness adjustment for each of the micro LED light emitting elements included in the light source 81. The projection lens 82 may have the same configuration as the projection lens 73, for example.

The third optical unit 90 includes, for example, a light source 91 implemented by an LED array including a plurality of micro LED light emitting elements. The light emission states of the plurality of micro LED light emitting elements included in the light source 91 can be changed independently of each other. In this case, in the vehicle headlamp 10, the lamp control unit 60 is configured to perform ON/OFF control and brightness adjustment for each of the micro LED light emitting elements included in the light source 91.

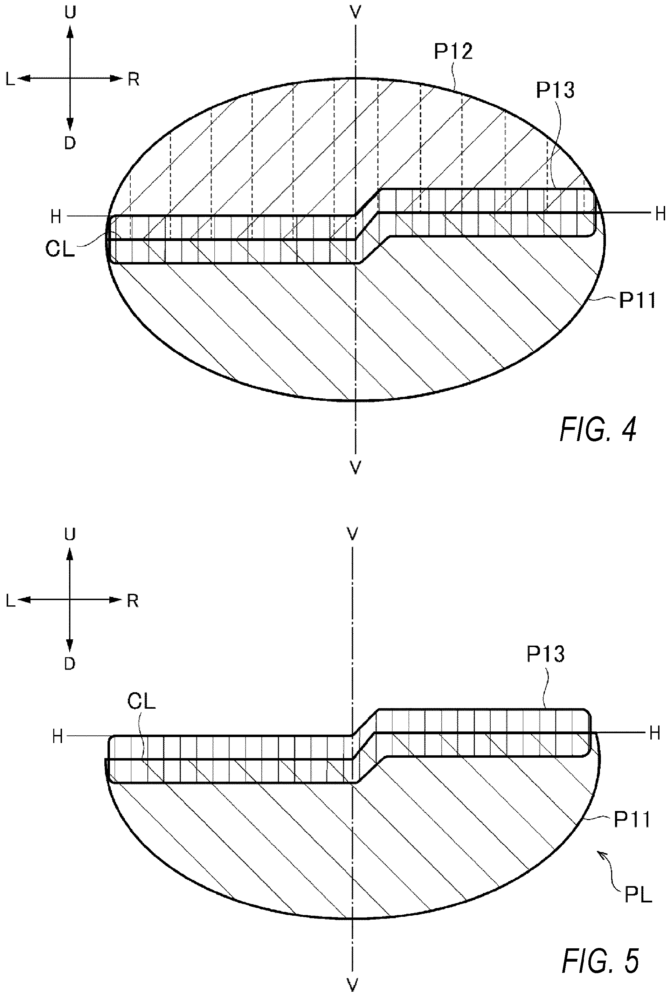

Here, a first light distribution pattern P11 emitted from the first optical unit 70, a second light distribution pattern P12 emitted from the second optical unit 80, and a third light distribution pattern P13 emitted from the third optical unit 90 will be described with reference to FIG. 4. In the present embodiment, a case where the vehicle 1 is traveling in the right lane will be described. The first light distribution pattern P11, the second light distribution pattern P12, and the third light distribution pattern P13 illustrated in FIG. 4 are shown projected onto a virtual vertical screen at a predetermined position in front of the vehicle 1 (for example, a position 25 m in front of the vehicle 1). Note that the light distribution patterns illustrated in the subsequent drawings are also shown projected onto a virtual vertical screen at a predetermined position in front of the vehicle 1. FIG. 4 illustrates a line V-V indicating a vertical direction (the upper-lower direction in FIG. 4) at the center of an irradiation range of the vehicle headlamp 10, and a line H-H orthogonal to the line V-V and extending in a horizontal direction (the left-right direction in FIG. 4). In addition, the subsequent drawings illustrating the light distribution patterns also illustrates the line V-V indicating the vertical direction at the center of the irradiation range of the vehicle headlamp 10 and the line H-H orthogonal to the line V-V and extending in the horizontal direction.

As illustrated in FIG. 4, the first light distribution pattern P11 is a so-called low beam light distribution pattern. The first light distribution pattern P11 has a cutoff line CL. The first light distribution pattern P11 is emitted, by the first optical unit 70, to a region including the cutoff line CL and a region below the cutoff line CL. The first light distribution pattern P11 is a region hatched with diagonal lines slanting downward to the right in FIG. 4.

The second light distribution pattern P12 forms a so-called high beam light distribution pattern, together with the first light distribution pattern P11. The second light distribution pattern P12 is emitted, by the second optical unit 80, to a region including at least a region above the cutoff line CL. The second light distribution pattern P12 is a region hatched with diagonal lines slanting upward to the right in FIG. 4. The light source 81 of the second optical unit 80 is implemented by a micro LED light emitting element capable of individually performing ON/OFF control and brightness adjustment. Therefore, the second light distribution pattern P12 is divided into a plurality of irradiation regions, any of which can change an illumination state independently of one another. In the example illustrated in FIG. 4, boundaries between the irradiation regions included in the second light distribution pattern P12 are indicated by a plurality of broken lines extending in the upper-lower direction. The boundaries of the plurality of irradiation regions of the second light distribution pattern P12 is not limited to the example illustrated in FIG. 4, and the illumination state can be changed independently by each of the plurality of micro LED light emitting elements that implement the light source 81 of the second optical unit 80 in practice. In the present embodiment, the second optical unit 80 emits an ADB light distribution pattern. Therefore, any irradiation region in the second light distribution pattern P12 can be reduced in light.

The third light distribution pattern P13 is emitted by the third optical unit 90 so as to overlap the cutoff line CL along the cutoff line CL of the first light distribution pattern P11. The third light distribution pattern P13 is a region hatched with vertical lines in FIG. 4. The light source 91 of the third optical unit 90 is implemented by a micro LED light emitting element capable of individually performing ON/OFF control and brightness adjustment. Therefore, the third light distribution pattern P13 is divided into a plurality of irradiation regions, any of which can change an illumination state independently of one another.

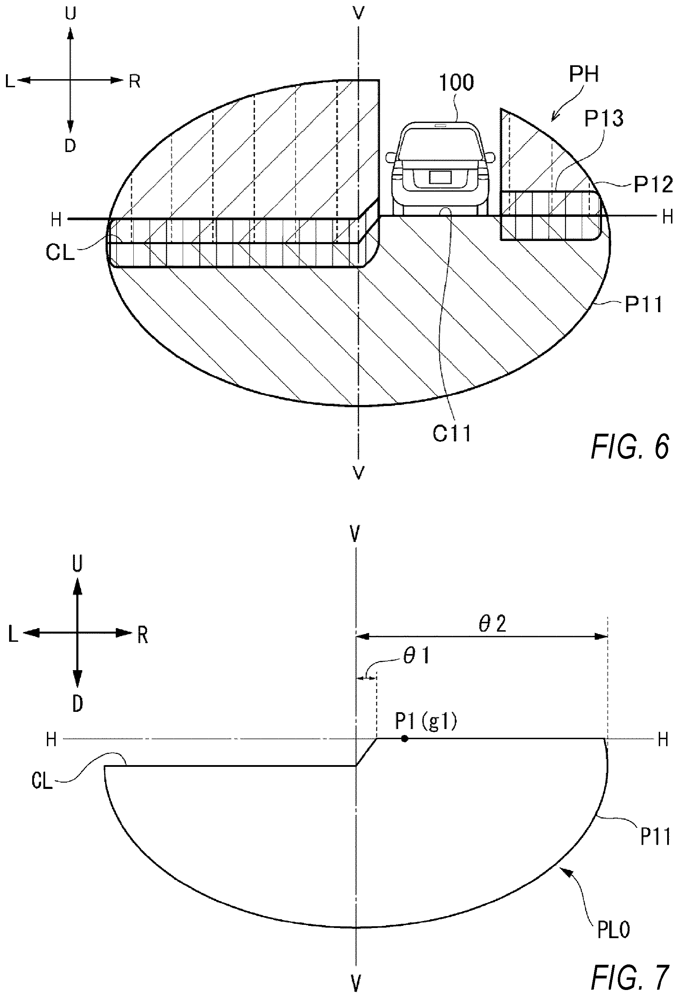

Next, with reference to FIGS. 5 and 6, a low beam selected light distribution pattern PL emitted from the vehicle headlamp 10 during low beam emission and a high beam light distribution pattern PH emitted from the vehicle headlamp 10 during high beam emission will be described. The low beam emission refers to a time when the driver of the vehicle 1 performs an operation on the light switch 40 to emit the low beam selected light distribution pattern PL. The high beam emission refers to a time when the driver of the vehicle 1 performs an operation on the light switch 40 to emit the high beam light distribution pattern PH. FIG. 5 is a diagram illustrating the light distribution pattern PL during the low beam emission. FIG. 6 is a diagram illustrating the light distribution pattern PH during the high beam emission. The high beam light distribution pattern PH emitted in the present embodiment is an ADB light distribution pattern.

As illustrated in FIG. 5, during the low beam emission, the vehicle headlamp 10 turns on the first optical unit 70 and the third optical unit 90 to emit the low beam selected light distribution pattern PL including the first light distribution pattern P11 and the third light distribution pattern P13. That is, the low beam selected light distribution pattern PL in the present embodiment includes the third light distribution pattern P13, and the third light distribution pattern P13 is emitted so as to overlap the cutoff line CL. Therefore, a region in which the first light distribution pattern P11 and the third light distribution pattern P13 are emitted in an overlapping manner is brighter than a region in which only the first light distribution pattern P11 is emitted and the third light distribution pattern P13 is not emitted. As described above, the region in the vicinity of the cutoff line CL of the low beam selected light distribution pattern PL has brightness that changes in two stages. If counting from a region where no light is emitted, it can be said that the region in the vicinity of the cutoff line CL of the low beam selected light distribution pattern PL has brightness that changes in three stages.

As illustrated in FIG. 6, during the high beam emission, the vehicle headlamp 10 turns on the first optical unit 70, the second optical unit 80, and the third optical unit 90 to emit the high beam light distribution pattern PH including the first light distribution pattern P11, the second light distribution pattern P12, and the third light distribution pattern P13.

Next, with reference to FIG. 6, the high beam light distribution pattern PH in a case where a preceding vehicle 100 is in front of the vehicle 1 during the high beam emission will be described. In the example illustrated in FIG. 6, since a preceding vehicle 100 is present in front of the vehicle 1, the camera 30 outputs imaging data regarding the preceding vehicle 100 to the vehicle control unit 50. The vehicle control unit 50 detects the surrounding environment information including the position information of the preceding vehicle 100 from the imaging data received from the camera 30, and transmits the surrounding environment information to the lamp control unit 60. The lamp control unit 60 is configured to control the second optical unit 80, based on the surrounding environment information received from the vehicle control unit 50, so that light is not emitted toward the preceding vehicle 100. As described above, the second light distribution pattern P12 formed by the second optical unit 80 is divided into a plurality of irradiation regions, any of which can change an illumination state independently of one another. Therefore, in the example illustrated in FIG. 6, the second optical unit 80 is controlled so as not to emit light to the region where the preceding vehicle 100 is present among the plurality of irradiation regions of the second light distribution pattern P12, thereby blocking light to a peripheral region of the preceding vehicle 100.

Further, the lamp control unit 60 controls the third optical unit 90, based on the surrounding environment information received from the vehicle control unit 50, such that light is not emitted toward a region of the third light distribution pattern P13 that overlaps a light-blocked region of the second light distribution pattern P12. As described above, the third light distribution pattern P13 formed by the third optical unit 90 is divided into a plurality of irradiation regions, any of which can change an illumination state independently of one another. Therefore, in the example illustrated in FIG. 6, light is blocked out in the region that overlaps the light-blocked region of the second light distribution pattern P12 among the plurality of irradiation regions of the third light distribution pattern P13.

As described above, during the high beam emission, light is blocked out in the peripheral region of the preceding vehicle 100 in the second light distribution pattern P12 and in the third light distribution pattern P13. Therefore, a portion C11 of the cutoff line CL located below the preceding vehicle 100 is formed by a boundary between a region irradiated with the first light distribution pattern P11 and a region not irradiated with the first light distribution pattern P11, the second light distribution pattern P12, and the third light distribution pattern P13. That is, the portion C11 of the cutoff line CL has a clear light-dark difference.

On the other hand, as shown in FIG. 5, when the low beam selected light distribution pattern PL is emitted, the third light distribution pattern P13 is emitted so as to overlap the cutoff line CL of the first light distribution pattern P11. Therefore, the cutoff line CL formed when the low beam selected light distribution pattern PL is emitted appears blurrier than the cutoff line CL (the part C11 in the present embodiment) formed when the high beam light distribution pattern PH (ADB light distribution pattern) is emitted. A general low beam light distribution pattern is formed by blocking a part of light, and therefore, the light-dark difference in the cutoff line is usually clear. Therefore, the cutoff line CL of the low beam selected light distribution pattern PL in the present embodiment is blurred as compared with the cutoff line of a general low beam light distribution pattern.

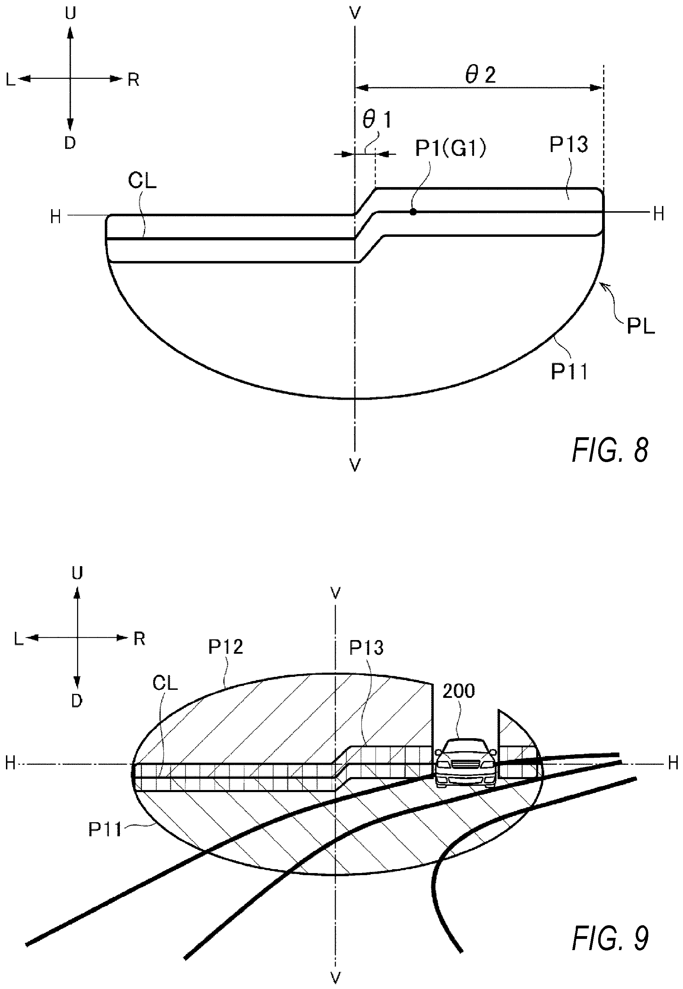

A degree of blurring of the cutoff line CL can be expressed by a brightness gradient. Therefore, in the present embodiment, the degree of blurring of each cutoff line will be described in detail with reference to FIGS. 7 and 8 showing light distribution patterns having cutoff lines with different degrees of blurring. FIG. 7 is a diagram illustrating a brightness gradient g1 in the cutoff line CL of a low beam light distribution pattern PL0 in the related art. A position P1 in FIG. 7 is a reference position for measuring the brightness gradient. The position P1 is any position that is on the line H-H, and is within a range from an angle $\theta1$ to the right to an angle $\theta2$ to the left from a front face of the vehicle headlamp in the horizontal direction. The brightness gradient g1 at the position P1 is calculated using the following equation (1). E(a) represents illuminance at the position P1. E(a + 0.1) represents illuminance at a position above the position P1 by a vertical angular position of 0.1 degrees.

$$g1 = \log E(a) - \log E(a + 0.1) \qquad \text{Equation (1)}$$

Next, a brightness gradient G1 in the cutoff line CL of the low beam selected light distribution pattern PL according to the present embodiment will be described with reference to FIG. 8. The position P1 in FIG. 8 is the same position as the position P1 in FIG. 7. A brightness gradient g1 at the position P1 is calculated using the following equation (2).

$$G1 = \mathrm{logE}(a) - \mathrm{logE}(a + 0.1) \qquad \text{Equation (2)}$$

As illustrated in FIG. 7, the low beam light distribution pattern PL0 in the related art does not include the third light distribution pattern P13. On the other hand, as illustrated in FIG. 8, the low beam selected light distribution pattern PL according to the present embodiment includes the third light distribution pattern P13. Therefore, the brightness gradient G1 is smaller than the brightness gradient g1. The smaller the brightness gradient, the smaller the light-dark difference of the cutoff line CL. Therefore, the cutoff line CL of the low beam selected light distribution pattern PL according to the present embodiment is visually perceived as being blurrier than the cutoff line CL of the low beam light distribution pattern PL0 in the related art.

The higher the mounting position of a vehicle headlamp on a vehicle, the closer a cutoff line of a low beam light distribution pattern becomes to a mounting height of a rearview mirror of a preceding vehicle. Therefore, when the mounting position is high, it is preferable to form a low beam light distribution pattern having a sharp cutoff line where the light and dark suddenly change. However, when attempting to form a low beam light distribution pattern having a sharp cutoff line where the light and dark suddenly change at the cutoff line, it is difficult to meet the demand for forming an easy-to-see low beam light distribution pattern by blurring the cutoff line.

According to the vehicle headlamp 10 having the above-described configuration, it is possible to form the first light distribution pattern P11 emitted to the region below the cutoff line CL, the second light distribution pattern P12 emitted at least to the region above the cutoff line CL, and the third light distribution pattern P13 emitted to overlap the cutoff line CL along the cutoff line CL. That is, during the low beam emission, the third light distribution pattern P13 is formed so as to overlap the cutoff line CL formed by the first light distribution pattern P11. Therefore, the first light distribution pattern P11 and the third light distribution pattern P13 can form the low beam selected light distribution pattern PL having good visibility.

On the other hand, the lamp control unit 60 controls the third optical unit 90 such that at least a part of the third light distribution pattern P13 is not irradiated with light under a predetermined condition even when the first light distribution pattern P11 is emitted. Specifically, for example, during the high beam emission in which the first light distribution pattern P11, the second light distribution pattern P12, and the third light distribution pattern P13 are emitted, when the preceding vehicle 100 is present in front of the vehicle 1, the lamp control unit 60 controls the second optical unit 80 such that light is not emitted to the peripheral region of the preceding vehicle 100 among the plurality of irradiation regions included in the second light distribution pattern P12, and controls the third optical unit 90 such that light is not emitted to the portion of the third light distribution pattern P13 that overlaps the non-irradiation region of the second light distribution pattern P12. That is, the lamp control unit 60 controls the light distribution of at least a part of the third light distribution pattern P13 in conjunction with the light distribution of the plurality of irradiation regions constituting the second light distribution pattern P12. Therefore, during the high beam emission, a so-called ADB light distribution pattern is emitted, and the clear cutoff line CL (portion C11) is formed in the non-irradiation region of the third light distribution pattern P13. However, since the cutoff line CL (portion C11) appears only in the non-irradiation region of the second light distribution pattern P12, the visibility is hardly deteriorated.

As described above, according to the vehicle headlamp 10 of the present embodiment, the blurred cutoff line CL is formed during the low beam emission, and the visibility is excellent. Further, even if the mounting height to the vehicle 1 becomes high and the mounting height of the rearview mirror of the preceding vehicle 100 becomes close to the height of the cutoff line CL, when the preceding vehicle 100 is present in the vicinity in front of the vehicle 1, a so-called ADB light distribution pattern is emitted, so that no glare is given to the preceding vehicle 100. As described above, by linking the light distribution of the second light distribution pattern P12 and the light distribution of at least a part of the light distribution of the third light distribution pattern P13 according to the situation outside the vehicle 1, it is possible to emit a light distribution pattern having good visibility while reducing the occurrence of glare even if the mounting height to the vehicle headlamp 10 is increased.

As described above, the cutoff line CL formed when both the first light distribution pattern P11 and the third light distribution pattern P13 are emitted is more blurred than the cutoff line CL formed when only the first light distribution pattern P11 is emitted. According to the vehicle headlamp 10 having the above configuration, it is possible to emit a light distribution pattern with less discomfort, particularly at the time of low beam emission.

Further, according to the vehicle headlamp 10 having the above configuration, the light irradiation region of the third optical unit 90 can be changed according to the situation, so that the vehicle headlamp 10 can emit an appropriate low beam selected light distribution pattern PL suited to the situation. In particular, the third light distribution pattern P13 formed by the third optical unit 90 is divided into a plurality of regions, any of which can adjust luminous intensity independently of one another. That is, the irradiation region of the third optical unit 90 is divided into a plurality of regions, any of which can change an illumination state independently of one another. Therefore, the illumination state of the third light distribution pattern P13 formed by the third optical unit 90 can be densely changed according to the change in the position of the preceding vehicle 100.

(First Modification of First Embodiment)

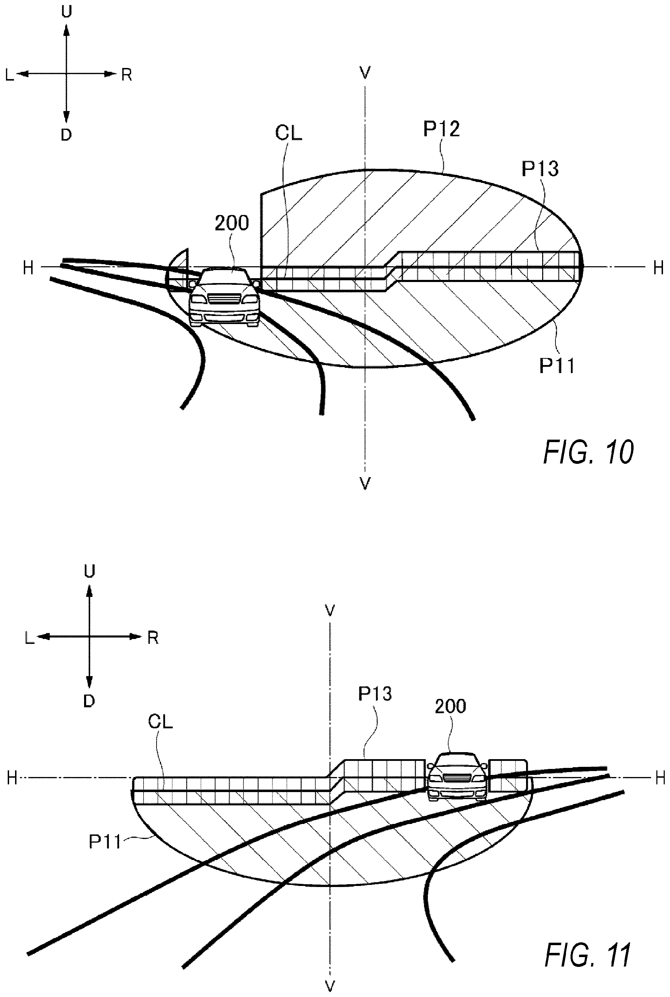

Next, a first modification of the first embodiment will be described with reference to FIGS. 9 and 10. FIG. 9 is a diagram illustrating a high beam light distribution pattern during the high beam emission in the first modification. FIG. 10 is a diagram illustrating a low beam selected light distribution pattern during low beam emission in the first modification. In the modification, the same portions as those in the first embodiment are described using the same reference numerals, and description of repeated portions is omitted as appropriate. In the present modification, the vehicle 1 is also assumed to be traveling in the right lane. In the present modification, it is assumed that the vehicle 1 is traveling on a road with no gradient. In the present modification, as illustrated in FIGS. 9 and 10, it is assumed that the vehicle 1 is approaching a road that curves to the right, and an oncoming vehicle 200 (an example of the object) is present in front of the vehicle 1. Since the vehicle 1 is approaching a right curve, the oncoming vehicle 200 is traveling in the left lane, which is the oncoming lane, but is located on the own lane side (right side in FIGS. 9 and 10) with respect to the center in the left-right direction in front of the vehicle 1.

In the example illustrated in FIG. 9, since the oncoming vehicle 200 is present in front of the vehicle 1, the camera 30 outputs imaging data regarding the oncoming vehicle 200 to the vehicle control unit 50. The vehicle control unit 50 detects the surrounding environment information including the position information of the oncoming vehicle 200 from the imaging data received from the camera 30, and transmits the surrounding environment information to the lamp control unit 60. The lamp control unit 60 is configured to control the second optical unit 80 based on the surrounding environment information received from the vehicle control unit 50, so that light is not emitted toward the oncoming vehicle 200. Therefore, in the example illustrated in FIG. 9, light is blocked out in a region of the second light distribution pattern P12 on the own lane side around the oncoming vehicle 200.

Further, the lamp control unit 60 is configured to control the third optical unit 90, based on the surrounding environment information received from the vehicle control unit 50, such that light is not emitted toward a region of the third light distribution pattern P13 that overlaps a light-blocked region of the second light distribution pattern P12. The light source 91 of the third optical unit 90 is implemented by an LED array. Therefore, the third light distribution pattern P13 formed by the third optical unit 90 is divided into a plurality of regions, any of which can change an illumination state independently of one another. Therefore, in the example illustrated in FIG. 9, light is blocked out in the region that overlaps the light-blocked region of the second light distribution pattern P12 among the plurality of regions of the third light distribution pattern P13.

As in the example illustrated in FIG. 10, even when the oncoming vehicle 200 is present in front of the vehicle 1 at the time of low beam emission, the third optical unit 90 may be controlled such that light is not emitted toward a region of the third light distribution pattern P13 where the oncoming vehicle 200 is present. That is, the lamp control unit 60 turns on and off the individual LED arrays constituting the light source 91 of the third optical unit 90 based on the surrounding environment information received from the vehicle control unit 50, so that light is blocked out in the region where the oncoming vehicle 200 is present among the plurality of regions of the third light distribution pattern P13.

According to the vehicle headlamp 10 of the present modification, when the vehicle 1 is turning and the oncoming vehicle 200 is present in front of the vehicle 1, for example, when the vehicle 1 is approaching a road that curves to the right and the oncoming vehicle 200 is present in front of the vehicle 1 as in the example shown FIGS. 9 and 10, the lamp control unit 60 forms the third light distribution pattern P13 such that at least a region on the own lane side of the third light distribution pattern P13 is not irradiated with light. According to the above configuration, even if the light that illuminates the own lane in the third light distribution pattern P13 may also illuminate the oncoming lane, since light is blocked out in the region on the own lane side in the third light distribution pattern P13, the occurrence of glare to the occupant of the oncoming vehicle 200 can be reliably reduced.

The cutoff line CL of the first light distribution pattern P11 is higher on the own lane side (right side in FIG. 9) than on the oncoming lane side (left side in FIG. 9). Therefore, when the vehicle 1 approaches a road that curves to the right and the oncoming vehicle 200 is present in front of the vehicle 1, the cutoff line CL of the first light distribution pattern P11 becomes close to the eye height of the occupant of the oncoming vehicle 200. Therefore, as in the example of FIG. 9, it is preferable to form a light distribution pattern having a clear cutoff line CL in which the light and dark suddenly change with the cutoff line CL as a boundary by blocking out light particularly in the region on the own lane side of the third light distribution pattern P13.

(Second Modification of First Embodiment)

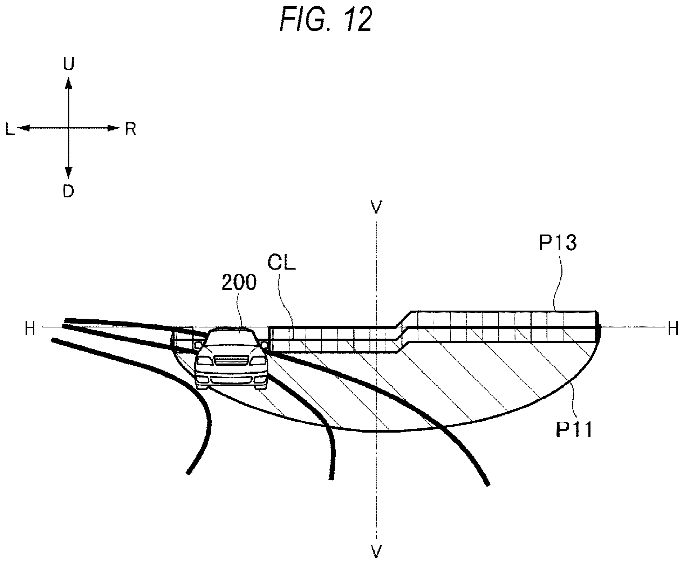

Next, a second modification of the first embodiment will be described with reference to FIGS. 11 and 12. FIG. 11 is a diagram illustrating a high beam light distribution pattern during the high beam emission in the second modification. FIG.

12 is a diagram illustrating a low beam selected light distribution pattern during low beam emission in the second modification. In the modification, the same portions as those in the first embodiment are described using the same reference numerals, and description of repeated portions is omitted as appropriate. In the present modification, the vehicle 1 is also assumed to be traveling in the right lane. In the present modification, it is also assumed that the vehicle 1 is traveling on a road with no gradient. In the present modification, as illustrated in FIGS. 11 and 12, it is assumed that the vehicle 1 is approaching a road that curves to the left, and the oncoming vehicle 200 is present in front of the vehicle 1. Since the vehicle 1 is approaching a left curve, the oncoming vehicle 200 is traveling in the left lane, which is the oncoming lane, and is present on the left side (left side in FIGS. 11 and 12) in the left-right direction in front of the vehicle 1.

In the example illustrated in FIG. 11, the camera 30 outputs the imaging data regarding the oncoming vehicle 200 to the vehicle control unit 50. The vehicle control unit 50 detects the surrounding environment information including the position information of the oncoming vehicle 200 from the imaging data received from the camera 30, and transmits the surrounding environment information to the lamp control unit 60. The lamp control unit 60 is configured to control the second optical unit 80, based on the surrounding environment information received from the vehicle control unit 50, so that light is not emitted toward the oncoming vehicle 200. Therefore, in the example illustrated in FIG. 11, light is blocked out in a region of the second light distribution pattern P12 on the oncoming lane side around the oncoming vehicle 200.

Further, the lamp control unit 60 controls the third optical unit 90 based on the surrounding environment information received from the vehicle control unit 50 such that light is not emitted toward a region of the third light distribution pattern P13 that overlaps a light-blocked region of the second light distribution pattern P12. The light source 91 of the third optical unit 90 is implemented by an LED array. Therefore, in the example illustrated in FIG. 11, light is blocked out in the region that overlaps the light-blocked region of the second light distribution pattern P12 among the plurality of regions of the third light distribution pattern P13.

FIG. 12 shows a light distribution pattern at the time of low beam emission as in FIG. 10 of the first modification. In the case of the low beam emission shown in FIG. 12, the third optical unit 90 is also controlled so that light is not emitted toward the region where the oncoming vehicle 200 is present in the third light distribution pattern P13. That is, light is blocked out in the region where the oncoming vehicle 200 is present among the plurality of regions of the third light distribution pattern P13 not only during the high beam emission but also during the low beam emission.

In the vehicle headlamp 10 according to the present modification, by blocking out light in the peripheral region of the oncoming vehicle 200 in the second light distribution pattern P12 and the third light distribution pattern P13 emitted forward of the vehicle 1, it is possible to emit the low beam light distribution pattern and the high beam light distribution pattern having good visibility while reducing the occurrence of glare.

(Second Embodiment)

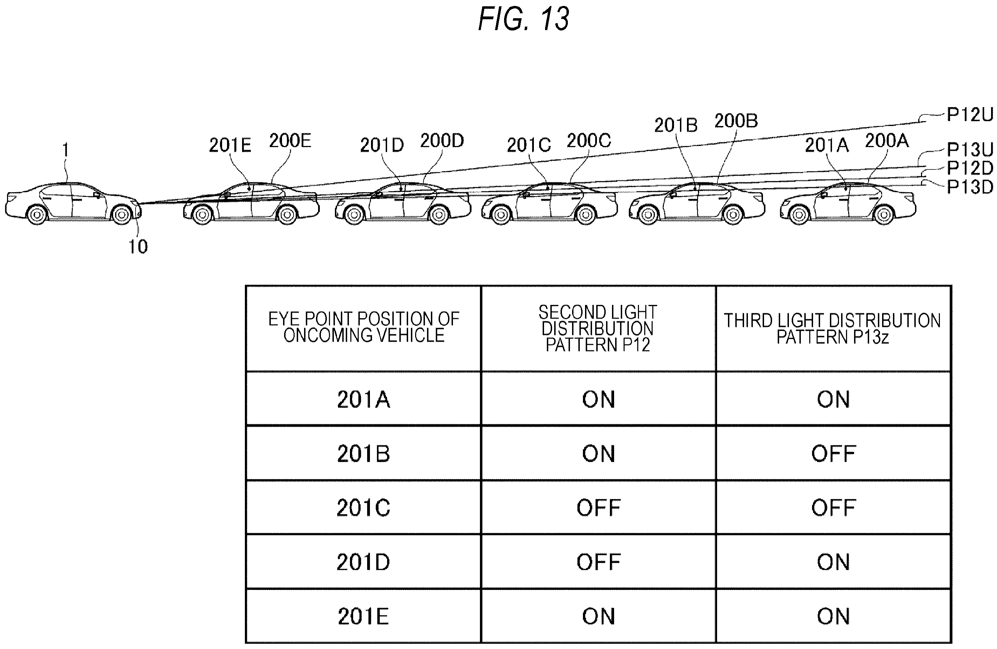

Next, a second embodiment will be described with reference to FIG. 13. In the present embodiment, the same portions as those of the first embodiment or the modifications of the first embodiment are described using the same reference numerals, and description of repeated portions is omitted as appropriate. In the present embodiment, the vehicle 1 is also assumed to be traveling in the right lane.

FIG. 13 is a schematic diagram illustrating a light distribution pattern when the oncoming vehicle 200 gradually approaches the vehicle 1 from the front of the vehicle. The low beam selected light distribution pattern during the low beam emission in the present embodiment is the same as the low beam selected light distribution pattern during the low beam emission in the first embodiment, that is, the low beam selected light distribution pattern PL illustrated in FIG. 5. The high beam light distribution pattern during the high beam emission in the present embodiment is the same as the high beam light distribution pattern during the high beam emission in the first embodiment, that is, the high beam light distribution pattern PH illustrated in FIG. 6.

In the example illustrated in FIG. 13, it is assumed that the oncoming vehicle 200 gradually approaches the vehicle 1 including the vehicle headlamp 10 from a position indicated by reference symbol 200A to a position indicated by reference symbol 200E. In FIG. 13, a light beam for irradiating an upper end portion of the second light distribution pattern P12 formed by the vehicle headlamp 10 is indicated by reference symbol P12U, and a light beam for irradiating a lower end portion of the second light distribution pattern P12 is indicated by reference symbol P12D. Further, a light beam for irradiating an upper end portion of the third light distribution pattern P13 formed by the vehicle headlamp 10 is indicated by reference symbol P13U, and a light beam for irradiating a lower end portion of the third light distribution pattern P13 is indicated by reference symbol P13D.

In a case where an oncoming vehicle is at position 200A, an eye point 201A indicating the height of the eyes of the occupant of the oncoming vehicle 200A is located below the lower end portion P13D of the third light distribution pattern P13. Therefore, as shown in column 201A in the table in the lower part of FIG. 13, the lamp control unit 60 is configured to control the second optical unit 80 to emit light to all of the plurality of irradiation regions of the second light distribution pattern P12. Further, the lamp control unit 60 is configured to control the third optical unit 90 to emit light to all of the plurality of irradiation regions of the third light distribution pattern P13.

Next, in a case where the oncoming vehicle is at position 200B, an eye point 201B of an oncoming vehicle 200B is positioned above the lower end portion P13D of the third light distribution pattern P13 and below the lower end portion P12D of the second light distribution pattern P12. Therefore, as shown in column 201B in the table of FIG. 13, the lamp control unit 60 controls the second optical unit 80 to emit light to all the irradiation regions of the second light distribution pattern P12, and controls the third optical unit 90 not to emit light to the peripheral region of an oncoming vehicle 200C among the plurality of irradiation regions of the third light distribution pattern P13.

Next, in a case where the oncoming vehicle is at position 200C, an eye point 201C of the oncoming vehicle 200C is positioned above the lower end portion P12D of the second light distribution pattern P12 and below an upper end portion P13U of the third light distribution pattern P13. Therefore, as shown in column 201C in the table of FIG. 13, the lamp control unit 60 is configured to control the second optical unit 80 not to emit light to the peripheral region of the oncoming vehicle 200C among the plurality of irradiation regions of the second light distribution pattern P12, and control the third optical unit 90 not to emit light to the peripheral region of the oncoming vehicle 200C among the plurality of irradiation regions of the third light distribution pattern P13.

Next, in a case where the oncoming vehicle is at position of 200D, an eye point 201D of an oncoming vehicle 200D is positioned above the upper end portion P13U of the third light distribution pattern P13 and below an upper end portion P12U of the second light distribution pattern P12. Therefore, as shown in column 201D in the table of FIG. 13, the lamp control unit 60 is configured to control the second optical unit 80 not to emit light to the peripheral region of the oncoming vehicle 200D among the plurality of irradiation regions of the second light distribution pattern P12, and control the third optical unit 90 to emit light to all of the plurality of irradiation regions of the third light distribution pattern P13.

Finally, in a case where the oncoming vehicle is at position of 200E, an eye point 201E of an oncoming vehicle 200E is located above the upper end portion P12U of the second light distribution pattern P12. Therefore, as shown in column 201E in the table of FIG. 13, the lamp control unit 60 is configured to control the second optical unit 80 to emit light to the entire region of the second light distribution pattern P12, and control the third optical unit 90 to emit light to the entire region of the third light distribution pattern P13.

According to the vehicle headlamp 10 of the present embodiment, even when the first light distribution pattern P11 is emitted, the illumination state of each of the plurality of regions included in the second light distribution pattern P12 is changed according to the positions of the eye points 201A to 201E (an example of the object) of the oncoming vehicle 200 (200A to 200E), and the illumination state of the third light distribution pattern P13 is changed according to the positions of the eye points 201A to 201E. That is, the light distribution of at least a part of the third light distribution pattern P13 is controlled in conjunction with the light distribution of the second light distribution pattern P12. According to the above configuration, light is blocked out in the region including the eye points 201A to 201E of the oncoming vehicles 200A to 200E in the second light distribution pattern P12 and in the third light distribution pattern P13, so that it is possible to emit a light distribution pattern having good visibility while reliably reducing the occurrence of glare to the occupant or the like of the oncoming vehicle.

Although the embodiments of the present disclosure have been described above, it is needless to say that the technical scope of the present disclosure should not be construed as being limited by the description of the embodiments. The present embodiment is merely an example, and it is understood by a person skilled in the art that various modifications of the embodiment are possible within the scope of the disclosure described in the claims. The technical scope of the present disclosure is determined based on the scope of the disclosure described in the claims and the equivalent scope thereof.

In each of the embodiments and each of the modifications described above, a configuration in which the second light distribution pattern P12 and the third light distribution pattern P13 do not emit (block) light to the peripheral region of the preceding vehicle 100 or the oncoming vehicle 200 has been mainly described, but the present disclosure is not limited to this example. For example, a peripheral region of the preceding vehicle 100 or the oncoming vehicle 200 may be irradiated with lower illuminance than other irradiation regions. That is, even when the first light distribution pattern P11 is emitted, it is sufficient that the luminous intensity of at least a part of the irradiation regions of the third light distribution pattern P13 is adjusted to such a degree that the occurrence of glare can be reduced.

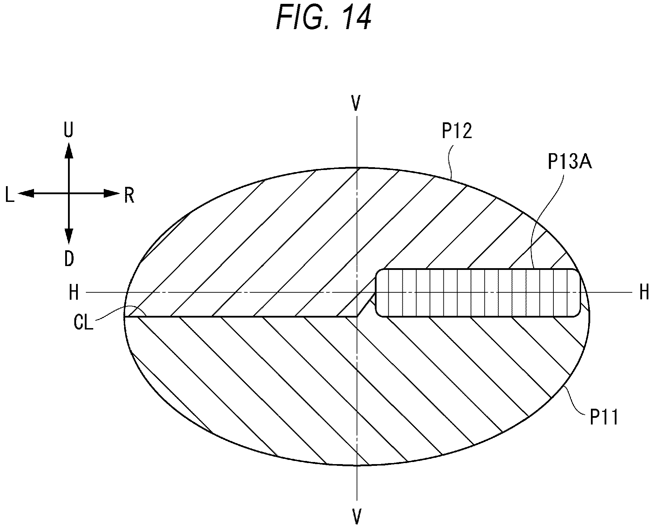

In the above-described embodiments, the third light distribution pattern P13 overlaps the entire cutoff line CL formed by the upper edge of the first light distribution pattern P11 in the left-right direction. Alternatively, the third light distribution pattern P13 may overlap only a part of the cutoff line CL in the left-right direction. For example, as in a third light distribution pattern P13A illustrated in FIG. 14, the third light distribution pattern P13 may be formed so as to overlap only a region on the own lane side (right side in FIG. 14) of the cutoff line CL. In the case of the example shown in FIG. 14, similarly to the third light distribution pattern P13 of the first embodiment and the second embodiment, at least a part of the third light distribution pattern P13A is adjusted in luminous intensity in conjunction with the light distribution of the second light distribution pattern P12. Alternatively, the luminous intensity of the entire third light distribution pattern P13A may be adjusted in conjunction with the light distribution of the second light distribution pattern P12. That is, when a preceding vehicle or an oncoming vehicle is included in a part of the second light distribution pattern P12, the lamp control unit 60 may control the third optical unit 90 not to emit light to the entire third light distribution pattern P13A.

In the above embodiments, the case where the vehicle 1 is traveling in the right lane has been described, but the present disclosure can also be applied to a case where the vehicle 1 is traveling in the left lane.

In the above embodiments, the vehicle headlamp 10 may include a single optical unit capable of achieving the function of the first optical unit 70, the function of the second optical unit 80, and the function of the third optical unit 90. In this case, since the first optical unit 70, the second optical unit 80, and the third optical unit 90 are implemented by a common optical unit, the number of components can be reduced.

In the above embodiments, the vehicle headlamp 10 may include the second optical unit 80 and an optical unit capable of achieving the function of the first optical unit 70 and the function of the third optical unit 90. The vehicle headlamp 10 may include the third optical unit 90 and an optical unit capable of achieving the function of the first optical unit 70 and the function of the second optical unit 80. In these cases, the number of components can be reduced.

In the above embodiments, the first optical unit 70, the second optical unit 80, and the third optical unit 90 may be implemented by, for example, at least one light source, a drive mirror, and an optical system including a lens or a mirror. The drive mirror may include, for example, a micro electro mechanical systems (MEMS) mirror, a digital mirror device (DMD), or a rotation blade mirror.

In the above embodiments, the lamp control unit 60 is provided in the vehicle headlamp 10. Alternatively, the lamp control unit 60 may be provided in the vehicle 1 instead of the vehicle headlamp 10. In other words, the lamp control unit 60 may be integrated into the vehicle control unit 50.

In the above embodiments, the camera 30 is provided in the vehicle 1. Alternatively, the camera 30 may be provided in the vehicle headlamp 10 instead of the vehicle 1.

As described above, the following matters are disclosed in the present specification.

(1) A vehicle headlamp to be mounted on a vehicle, in which

the vehicle headlamp is configured to form:

a first light distribution pattern emitted to a region below a cutoff line;
a second light distribution pattern emitted to at least a region above the cutoff line; and
a third light distribution pattern emitted along the cutoff line to overlap the cutoff line,

the second light distribution pattern includes a plurality of irradiation regions, and
light distribution of at least a part of the third light distribution pattern is controlled in conjunction with light distribution of the plurality of irradiation regions of the second light distribution pattern.
According to the above configuration, by controlling the light distribution of the third light distribution pattern in conjunction with the light distribution of the second light distribution pattern, it is possible to emit a light distribution pattern having good visibility while reducing the occurrence of glare.

(2) In the vehicle headlamp according to (1), even in a case where the first light distribution pattern is emitted, luminous intensity of the at least one part of the third light distribution pattern is adjusted in conjunction with adjustment in luminous intensity of each of the plurality of regions of the second light distribution pattern according to a position of an object outside the vehicle.
According to the above configuration, by linking the luminous intensity adjustment of each irradiation region of the second light distribution pattern with the luminous intensity adjustment of at least one part of the third light distribution pattern, it is possible to reduce the occurrence of glare due to irradiation light that forms the third light distribution pattern.

(3) A vehicle headlamp to be mounted on a vehicle, in which

the vehicle headlamp is configured to form:

a first light distribution pattern emitted to a region below a cutoff line;
a second light distribution pattern emitted to at least a region above the cutoff line; and
a third light distribution pattern emitted along the cutoff line to overlap the cutoff line, and

even in a case where the first light distribution pattern is emitted, luminous intensity of at least a part of an irradiation region of the third light distribution pattern is adjusted under a predetermined condition.
According to the above configuration, by adjusting the luminous intensity of the third light distribution pattern according to the situation, it is possible to emit a light distribution pattern having good visibility while reducing the occurrence of glare.

(4) In the vehicle headlamp according to (3), in a case where the vehicle is turning and an oncoming vehicle is present in front of the vehicle, the at least the part is a region of the third light distribution pattern on an own lane side. According to the above configuration, even if the light that illuminates the own lane in the third light distribution pattern may also illuminate the oncoming lane, since luminous intensity of the region on the own lane side in the third light distribution pattern is adjusted, the occurrence of glare to the occupant of the oncoming vehicle can be reduced.

(5) In the vehicle headlamp according to (3),

the second light distribution pattern includes a plurality of irradiation regions,

the predetermined condition is a case where luminous intensity of any one region of the plurality of irradiation regions is adjusted during high beam emission in which the first light distribution pattern, the second light distribution pattern, and the third light distribution pattern are emitted, and

at least the part of the irradiation region of the third light distribution pattern includes a region overlapping the one region of the second light distribution pattern.

According to the above configuration, by linking the luminous intensity adjustment of at least a part of the second light distribution pattern with the luminous intensity adjustment of at least one part of the third light distribution pattern, it is possible to reduce the occurrence of glare due to irradiation light that forms the third light distribution pattern.

(6) In the vehicle headlamp according to any one of (1) to (5), the cutoff line formed in a case where both the first light distribution pattern and the third light distribution pattern are emitted is blurred more than the cutoff line formed in a case where only the first light distribution pattern is emitted.

According to the above configuration, since the light-dark boundary of the cutoff line is blurred by emitting both the first light distribution pattern and the third light distribution pattern, a light distribution pattern with less discomfort can be emitted.

(7) In the vehicle headlamp according to any one of (1) to (6), the third light distribution pattern is divided into a plurality of regions whose luminous intensity is configured to be adjusted independently of each other.

According to the above configuration, the irradiation region of the third light distribution pattern can be densely changed.

**Claims**

1. A vehicle headlamp to be mounted on a vehicle,

   wherein the vehicle headlamp is configured to form:

   a first light distribution pattern emitted to a region below a cutoff line;
   a second light distribution pattern emitted to at least a region above the cutoff line; and
   a third light distribution pattern emitted along the cutoff line to overlap the cutoff line,

   the second light distribution pattern includes a plurality of irradiation regions, and
   light distribution of at least a part of the third light distribution pattern is controlled in conjunction with light distribution of the plurality of irradiation regions of the second light distribution pattern.

2. The vehicle headlamp according to claim 1,
   wherein even in a case where the first light distribution pattern is emitted, luminous intensity of the at least the part of the third light distribution pattern is adjusted in conjunction with adjustment in luminous intensity of each of the plurality of regions of the second light distribution pattern according to a position of an object outside the vehicle.

3. A vehicle headlamp to be mounted on a vehicle,

   wherein the vehicle headlamp is configured to form:

   a first light distribution pattern emitted to a region below a cutoff line;
   a second light distribution pattern emitted to at least a region above the cutoff line; and
   a third light distribution pattern emitted along the cutoff line to overlap the cutoff line, and

even in a case where the first light distribution pattern is emitted, luminous intensity of at least a part of an irradiation region of the third light distribution pattern is adjusted under a predetermined condition.

4. The vehicle headlamp according to claim 3,
wherein in a case where the vehicle is turning and an oncoming vehicle is present in front of the vehicle, the at least the part of the irradiation region of the third light distribution pattern is a region of the third light distribution pattern on an own lane side.

5. The vehicle headlamp according to claim 3,

wherein the second light distribution pattern includes a plurality of irradiation regions,
wherein the predetermined condition is a case where luminous intensity of any one region of the plurality of irradiation regions is adjusted during high beam emission in which the first light distribution pattern, the second light distribution pattern, and the third light distribution pattern are emitted, and
wherein at least the part of the irradiation region of the third light distribution pattern includes a region overlapping the one region of the second light distribution pattern.

6. The vehicle headlamp according to any one of claims 1 to 5,
wherein the cutoff line formed in a case where both the first light distribution pattern and the third light distribution pattern are emitted is blurred more than the cutoff line formed in a case where only the first light distribution pattern is emitted.

7. The vehicle headlamp according to any one of claims 1 to 6,
wherein the third light distribution pattern is divided into a plurality of regions whose luminous intensity is configured to be adjusted independently of each other.

## FIG. 1

## FIG. 2

# FIG. 3

FIG. 4

FIG. 5

U
L ← → R
D

100
PH
P13
P12
H ---- H
CL
P11
C11

*FIG. 6*

V

U
L ← → R
D

θ2
θ1
H ---- P1 (g1) ---- H
CL
P11
PL0

*FIG. 7*

*FIG. 8*

*FIG. 9*

FIG. 10

FIG. 11

## FIG. 12

## FIG. 13

| EYE POINT POSITION OF ONCOMING VEHICLE | SECOND LIGHT DISTRIBUTION PATTERN P12 | THIRD LIGHT DISTRIBUTION PATTERN P13z |
|---|---|---|
| 201A | ON | ON |
| 201B | ON | OFF |
| 201C | OFF | OFF |
| 201D | OFF | ON |
| 201E | ON | ON |

*FIG. 14*

## INTERNATIONAL SEARCH REPORT

| International application No. |
|---|
| **PCT/JP2024/001090** |

| A. | CLASSIFICATION OF SUBJECT MATTER |
|---|---|

*B60Q 1/14*(2006.01)i
FI:  B60Q1/14

According to International Patent Classification (IPC) or to both national classification and IPC

| B. | FIELDS SEARCHED |
|---|---|

Minimum documentation searched (classification system followed by classification symbols)

B60Q1/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/131139 A1 (KOITO MANUFACTURING CO., LTD.) 23 June 2022 (2022-06-23) paragraphs [0044]-[0283], fig. 1-36 | 1-7 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 March 2024** | **12 March 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/001090**

| Patent document cited in search report | | | Publication date (day/month/year) | Patent family member(s) | | | Publication date (day/month/year) |
|---|---|---|---|---|---|---|---|
| WO | 2022/131139 | A1 | 23 June 2022 | US | 2024/035639 | A1 | |
| | | | | paragraphs [0079]-[0331], fig. 1-36 | | | |
| | | | | EP | 4265475 | A1 | |
| | | | | CN | 116583434 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008262755 A